# EUROPEAN PATENT SPECIFICATION

(11) **EP 3 769 832 B1**
(45) Date of publication and mention of the grant of the patent: **07.09.2022**
(21) Application number: 19188343.8
(22) Date of filing: 25.07.2019
(51) Int. Cl.: B01D 21/00, B01D 21/04, B01D 21/24, B01D 17/02, B03D 1/14

(54) **GRAVITY SEPARATOR UNIT**
SCHWERKRAFTABSCHEIDER
UNITÉ DE SÉPARATEUR PAR GRAVITÉ

(43) Date of publication of application: 27.01.2021
(73) Proprietor: Nijhuis Water Technology B.V., 7007 CD Doetinchem (NL)
(72) Inventor: Hoenderboom, Robin Jacques Vincent, 7007 CD Doetinchem (NL); Kluit, Arie, 7007 CD Doetinchem (NL); Menkveld, Wilbert, 7007 CD Doetinchem (NL)
(74) Representative: Nederlandsch Octrooibureau

(56) References cited:
- CN-U- 207 468 243
- DE-A1-102005 054 030
- GB-A- 757 476
- JP-A- 2004 267 920
- KR-B1- 100 937 483
- RU-C1- 2 040 945
- US-A- 4 363 732

## Description

### Field of the invention

The present invention relates to a gravity separator unit, such as a dissolved air flotation unit or a sedimentation unit, comprising a container for holding at least 1m³ of water to be treated, wherein solid particles in the water are separated from water by means of gravity, wherein at least some of the solid particles may sink to collect at a floor of the container. Typically, some other of the particles may float to the water surface. The gravity separator unit may comprise a water outlet in a sidewall of the container at a level above the floor of the container and below the water surface of the water in the container, for letting water that has been treated flow out of the container.

### Background art

A gravity separator is known, for instance from CN 207468243U which describes an air flotation oil-water separation device which is adapted to be mounted on a vehicle. The known device comprises a container for water to be treated, and the container comprises sidewalls and a floor. Arranged above the floor is a tube honeycomb filter at an inclined angle of 60 degrees to the horizontal plane. The known device is further provided with a backwashing device and a sludge outlet at the bottom of the container. The backwashing device is arranged for ejecting liquid across a lower portion of the container to ensure that the sludge deposited on the bottom can be discharged through the sludge outlet. In this manner no scraper or the like is needed for scraping sludge that has deposited at the bottom of the container towards an outlet of the container. US4363732 and JP2004267920 are examples of tanks that are made of corrugated sheets.

An important factor in the cost for producing a gravity separator unit is the amount of material, in particular the amount of steel, needed to construct the container. It is an object of the invention to provide a gravity separator unit which may be constructed using a reduced amount of material. It is a further object of the invention to provide a method of constructing such a gravity separator unit.

### Summary of the invention

To this end, according to a first aspect the present invention provides a gravity separator unit comprising a container for holding at least 1 m³ of water to be treated, the container having sidewalls and a floor, wherein the floor comprises one or more corrugated pile sheets which define a plurality of alternating tops and parallel gutters facing the interior of the container, wherein the tops and lower portions of the gutters are vertically spaced apart by a distance of between 3 and 30 cm from each other. As the floor of the gravity separator unit comprises pile sheets, the stress in the plates is reduced compared to planar flat floor plates of similar mass and material. This may allow a reduction in material used to construct the floor of the gravity separator unit of as much as 30% - 50% when compared to planar floors of a same material, while the container remains capable of withstanding the pressure exerted thereon by the water in the container without significant bending or sagging of the floor. Additionally, the gutters provide defined locations for collecting sludge or other material that is deposited on the floor during treatment of water in the gravity separator unit. The distance by which the tops and lower portions of the gutters are vertically spaced apart from each other is preferably between 5 and 15 cm. Typically, any two neighbouring gutters are spaced apart from each other at a centre-to-centre distance of between 0,1 m - 1,0 m.

Generally the corrugated pile sheets are substantially completely made from a metal or metal alloy, e.g. stainless steel.

In an embodiment each pile sheet has a thickness between 1 and 5 mm, preferably between 1,8 and 3,2 mm. Pile sheets having this relatively small thickness have been found to be of sufficient stiffness to prevent significant bending or sagging of the floor. Moreover, a substantially planar metal surface, e.g. formed by a single planar plate or a by number of plates that are welded together, having a thickness in this range can be pressed into a shape having tops and gutters as described, in order to form the floor.

In an embodiment the floor has a length and the plurality of gutters extends substantially uninterrupted along a direction parallel to a longitudinal direction of the floor for at least half said length. This allows sludge or other material that has deposited in the gutters to easily be pushed to and collected at an end of the gutter, e.g. towards openings in the sidewall, or towards a sludge discharge in the floor of the container. Preferably the gutters extend uninterrupted over at least three fourths of the length of the floor, over even over the entire length of the floor.

In an embodiment each gutter of the plurality of gutters debouches at its distal end in a corresponding opening in one of the sidewalls, wherein each of said corresponding openings is arranged for allowing passage of sludge from the distal end of its corresponding gutter through the sidewall to outside of the container. This allows the sludge collected in a gutter to be extracted out of the container through the opening, in particular without requiring any openings for passage of sludge in the floor.

In an embodiment a drain valve is provided at or near each of the said openings in the sidewall, preferably wherein the drain valves are arranged outside of the container. In this manner, the gutters can extend completely to the openings in the sidewall, e.g. without requiring a gap or discharge opening in the floor itself near the sidewall between the gutters and the openings, and sludge can be removed from the container by opening the drain valves. The valves preferably are controlled to completely open in an amount of time which is shorter than the amount of time for closing the valves, e.g. by a factor of 3 or more, so that during opening the flow through the valves is high, and during closing the flow through the valves is lower.

In an embodiment the gravity separator unit further comprises jet nozzles arranged for ejecting jets of water into the gutters in a direction parallel to the longitudinal direction of the gutters. By activating the jet nozzles, sludge that has collected in the gutters can be pushed by the water toward an end of the gutters, e.g. towards and through the openings in the sidewall. The nozzles are preferably arranged for ejecting water from one side wall towards an opposite sidewall along the longitudinal direction of the gutters, and preferably towards the openings.

The gravity separator unit further comprises a scraping device that is at least partially arranged within the container at or near the floor, wherein the scraping device comprises at least two scraping elements, each scraping element comprising one or more scraping blades, wherein the scraping device is adapted for moving the each of the scraping elements along the gutters in a direction towards an end of the gutters with each of the one or more scraping blades thereof extending at least partially in a corresponding gutter. The sludge collected in one or more gutters can thus be pushed by towards the end sides of the gutter close to the sidewalls and/or towards the corresponding opening in the sidewall. The one or more scraping are arranged for scraping and pushing sludge along the gutter, preferably while remaining spaced apart from surface of the gutter.

In an embodiment each of the scraping blades is shaped to fill between 90% and 99% of the cross section of its corresponding gutter when seen in projection onto a plane normal to the longitudinal direction of the gutters. In this manner sludge collected in a gutter can pushed towards the distal end of the gutter by scraping blade, without the scraping blade contacting the gutter. The cross section of each gutters does not extend above its top.

In an embodiment each of the scraping blades is arranged for fitting within a corresponding gutter during movement of the blade along the longitudinal direction of the gutter preferably such that the edges of the scraping blade remains spaced apart by at least 0,1 cm from the gutter, and preferably less than 1 cm from the gutter as the blade is moved through the gutter in the longitudinal direction of the gutter.

In an embodiment, the floor comprises a predetermined number of gutters and each of the scraping elements comprises the same predetermined number of scraping blades. The scraping elements thus each have a same number of scraping blades as the floor has gutters, allowing fast disposal of the sludge using relatively few scraping elements,

In an embodiment the scraping device comprises an endless chain or belt which extends along a longitudinal direction of the container and to which the scraping elements are attached. The scraping elements can thus be simultaneously displaced in an endless loop.

In an embodiment, for each scraping element the scraping blades thereof lie in a substantially same plane. The scraping element can thus have a substantially planar shape, which facilitates driving movement of the scraping element using an endless chain or belt.

In an embodiment the scraping blades are arranged for moving towards the wall to a distance of 30 cm or less from the sidewall, preferably 20 cm or less. This relatively short distance allows the blades to push sludge very close to the sidewalls when the blades are supported on the endless chain or belt, while leaving sufficient space for the blades to rotate from a lower side of the chain or belt to an upper side thereof without colliding with the wall. The distance to the sidewall is a closest distance any portion of the blade, e.g. a tip of the blade, may have to the sidewall.

In an embodiment the floor comprises a predetermined number of gutters, wherein one or more of said scraping elements comprises at least two scraping blades, wherein at least one of said scraping elements is provided with fewer scraping blades that said predetermined number. Preferably each of the scraping elements is provided with fewer scraping blades than the predetermined number of gutters. The total amount of force that has to be exerted on each scraping element for pushing sludge along a gutter is thus less than if the scraping element had a blade in each gutter. Additionally, less material for the blades is needed per scraping element.

In an embodiment the gravity separator unit further comprises a water inlet at or near the sidewall of the container where the plurality of gutters debouch in corresponding openings in the sidewall. Heavier solid particles which generally sink to the floor soon after they enter the container, thus have to travel, or be pushed, along only a relatively short distance before they can exit through the openings.

In an embodiment one or more of the sidewalls comprises, or is formed from, one or more corrugated pile sheets which define a plurality of alternating tops and parallel gutters facing the interior of the container. This allows a further reduction of the material usage, compared to a container with planar sidewalls. The tops and lower portions of the gutters may be spaced apart by a distance of between 3 and 30 cm from each other, preferably spaced apart by a distance of between 5 and 15 cm from each other.

In an embodiment the bottom side of the floor is further provided with support bars wherein said connecting bars abut and follow the shape of the bottom side of the floor of the container. The support bars may provide structural support to the container while keeping the floor spaced apart from a surface on which the support bars rest.

In an embodiment the gravity separator unit is a dissolved air floatation unit or a sedimentation unit. In case the gravity separator unit is a dissolved air floatation unit then preferably a plate pack is provided in the container to promote laminar flow of water along the plate pack for enhancing separation of particles from the water.

According to a second aspect the present invention provides a method of manufacturing a gravity separator unit comprising the steps of: providing a container for treatment of water in the gravity separator unit, the container having sidewalls and a floor and adapted for containing a volume of water of at least 1 m³, and wherein further a water inlet for passage of water to be treated into the container, a water outlet for passage of treated water out of the container, and an overflow weir, for removal of scum floating on the surface of water in the container are provided; wherein the floor comprises one or more corrugated pile sheets which define a plurality of alternating tops and parallel gutters facing the interior of the container, wherein the tops and lower portions are vertically spaced apart by a distance of between 3 and 30 cm from each other. Manufacturing a container with the floor comprising the corrugated pile sheets allows the floor to be strong while using relatively little material. Each pile sheet of the floor preferably has a thickness between 1,0 and 5,0 mm, preferably between 1,8 and 3,2 mm, e.g. between 2,0 and 3,0 mm.

The step of providing the container may comprise cutting a number of planar sheets for the floor, subsequently using a sheet shaping machine to form the gutters in the sheets to form corrugated sheets, and then welding the several corrugated pile sheets to each other to form the floor. However, alternatively the step of providing the container may comprise welding several substantially planar sheets together and subsequently using a sheet shaping machine to form the gutters in the sheets that have been welded together, in this manner forming the floor or part thereof. A suitable sheet shaping machine is a sheet press or a press brake.

In an embodiment the gravity separator unit is a gravity separator unit according to the present invention as described herein.

In an embodiment, the method further comprises providing: a water inlet for passage of water to be treated into the container, a water outlet for passage of treated water out of the container, and an overflow weir for removal of scum floating on the surface of water in the container. Optionally a plate pack may be provided in the container to promote laminar flow of water along the plate pack for enhancing separation of particles from the water.

In an embodiment the method further comprises: providing a scraping device at least partially within the container at or near the floor, wherein the scraping device comprises at least two scraping elements, each scraping element comprising one or more scraping blades, wherein the scraping device is adapted for moving each scraping blade along and at least partially in a corresponding gutter along the longitudinal direction of the gutter towards one of the sidewalls. By providing a scraping device for pushing sludge that has collected in the gutters, the sludge can easily be displaced in the container even though the floor is not planar.

In an embodiment wherein said sidewall is provided with openings therein such that the distal ends of each of the gutters debouches in a corresponding opening in the sidewall, each of said openings arranged for allowing passage of sludge from the distal end of its corresponding gutter, through the sidewall, to outside of the container.

The method preferably further comprises the step of: adjusting a horizontal and/or a vertical spacing of the scraping blades on each scraping element such that each scraping blade of the scraping element fits within a gutter, preferably in such a manner that de edges of the scraping blade remains spaced apart by at least 0,1 cm from the walls of the gutter during translational movement of the blade through the gutter in the longitudinal direction of the gutter, and preferably less than 1 cm. Regardless of how the floor comprising one or more corrugated pile sheets is produced, the gutters generally are not completely planar due to e.g. inaccuracies during welding, during forming of the gutters, slight sagging or bending of floor, etc. By adjusting the horizontal and/or vertical spacing between the scraping blades to fit within the gutter after the container has been constructed, deviations in the positions of the gutters can be compensated for, and wear of the scraping blades is reduced.

### Short description of drawings

The present invention will be discussed in more detail below, with reference to the attached drawings, in which
Figs. 1A and 1B respectively show a schematical cross-sectional side view of a gravity separator unit according to the invention, and a detail of section IB thereof;
Figs. 2A and 2B respectively show an isometric view of a gravity separator unit according to the invention and a view along plane IIB-IIB of Fig. 2A;
Fig. 2C shows a portion of the interior of a container of an alternative gravity separator unit according to the invention, provided with jet nozzles;
Fig. 3A, 3B and 3C respectively show details of scraper elements as may be used in a gravity separator unit according to the invention;
Fig. 3D and 3E respectively show embodiments of a support bar supporting the floor of the container, as may be used in the present invention;
Figs. 4A - 4D show cross-sectional views of a floor comprising corrugated plates as may be used in the gravity separation unit of the invention;
Fig. 5 shows an outside side view of the gravity separator unit of Fig. 2A;
Fig. 6 shows a view of a container as may be used in another embodiment of the gravity according to the invention;
Fig. 7 shows a flowchart of a method according to the invention.

### Detailed description of the drawings

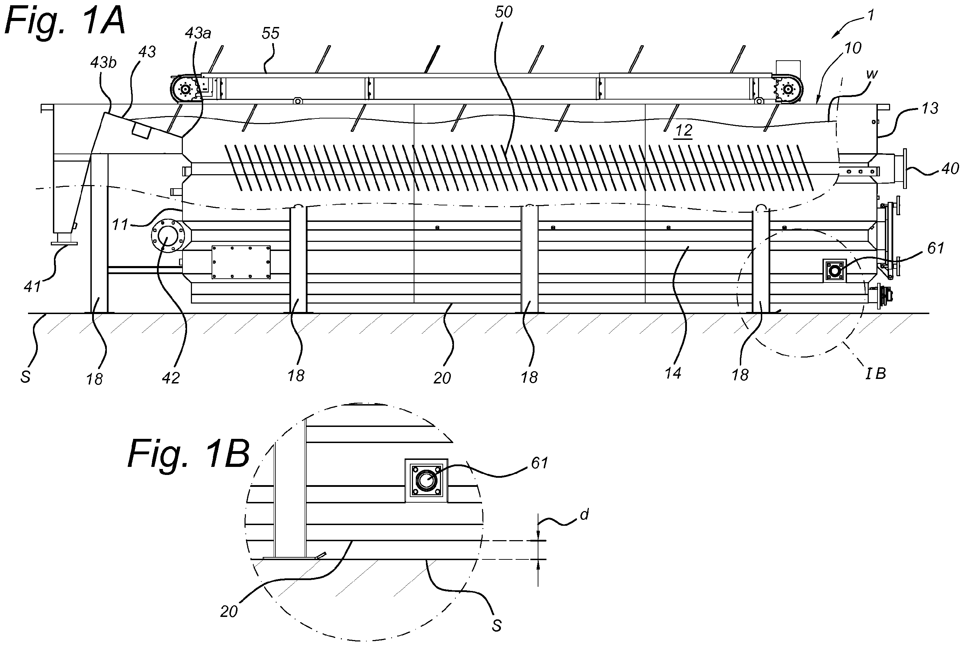

Fig. 1A shows a partially cut-away side view of gravity separator unit 1 according to the invention supported on a surface S which may for instance be the floor of a factory or treatment plant in which the gravity separator unit is installed. The gravity separator unit in case is a dissolved air flotation (DAF) unit comprising a container 10 having sidewalls 11, 12, 13, 14 of which sidewall 14 is shown partially cut away to allow a view of a portion of the interior of the container 10. The container further comprises a floor 20 connected to the sidewalls, so that together the sidewalls and the floor can hold a volume of water that is to be treated. The container 10 is supported on vertical supports 18 in such a manner that the container floor 20 is vertically spaced apart from the surface S by a distance d of about 15 cm, see the detail of section I-B in Fig. 1B, so that the floor does not directly contact the surface S.

The gravity separator unit 1 further comprises a water inlet 40 which extends through the sidewall 13 and through which water to be treated enters the container 10. The water to be treated is mixed with pressurized air so that air bubbles are present in the water. The air bubbles allow light weight particles in the water, such as oil particles, to adhere to the air bubbles and rise towards the water surface W. In order to reduce turbulence in the water and maximize the chance of such light weight particles remaining adhered to the air bubbles, optionally a plate pack 50 may be provided within the container 10, as shown. Such a plate pack comprises a plurality of parallel plates which extend below the water surface W and are inclined at an angle of about 60 degrees with respect to the horizontal. The lightweight particles in the water can thus rise from a lower part of the plate pack under substantially laminar flow conditions between plates of the plate pack 50 to the water surface W. As mentioned above, the plate pack is optional and may be left out.

The gravity separator unit 1 further comprises a skimming device 55 for skimming particles which float near the water surface towards, over, and past an overflow weir 43 which extends at an inclination of about 20 degrees to the horizontal from a lower edge 43a of the weir below the water surface W to an upper edge 43b of the weir above the water surface. Skimmed froth exits the gravity separator unit 1 via discharge outlet 41.

Besides such light weight particles, the water in the container 10 typically also contains heavier particles. These heavier particles will sink to the bottom of the container where they collect to form a kind of sludge. Water that has been treated in the gravity separator unit can exit the gravity separator unit via water outlet 42 that is connected to openings in the sidewall 11. In the embodiment shown, the water outlet 42 is arranged below the water surface W and above the level where the sludge collects.

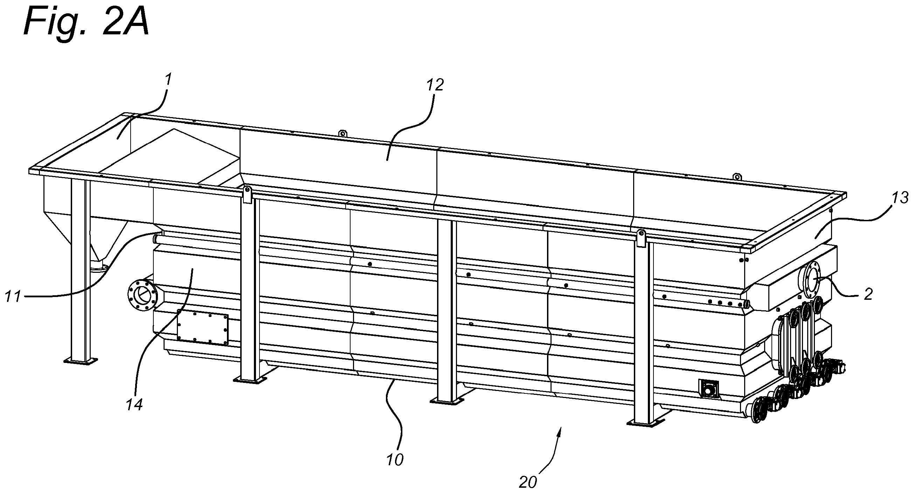

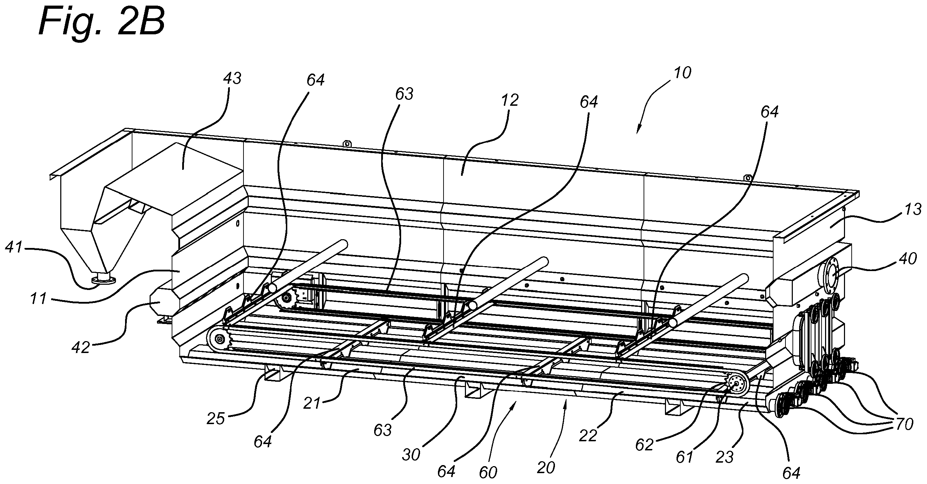

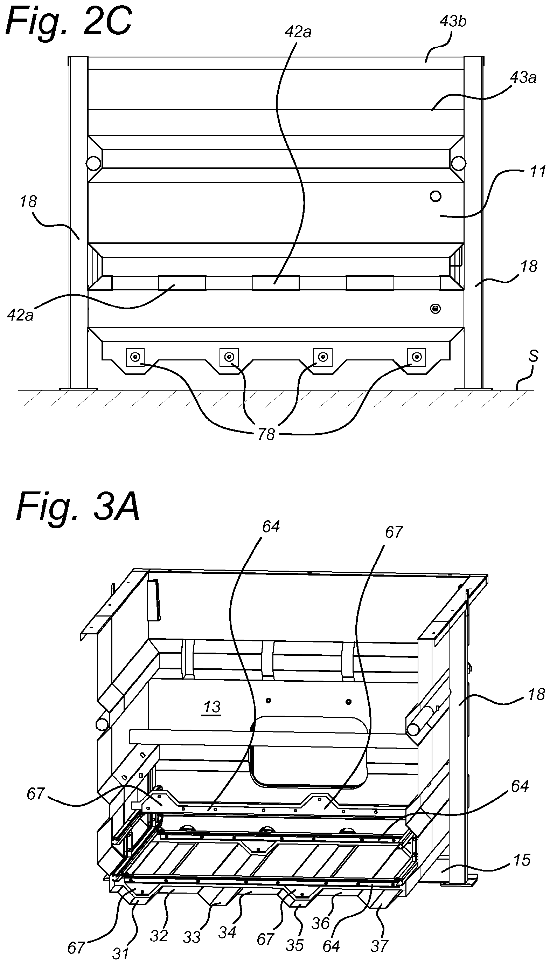

Figs. 2A and 2B respectively show an isometric view of a gravity separator unit of Fig. 1A and a cross-sectional view along plane IIB-IIB of Fig. 2A, however without the optional plate pack. In Figs. 2A and 2B the water surface and skimmer device have been not been shown for reasons of clarity. The floor 20 of the container is substantially constructed from a plurality of corrugated pile sheets 21,22,23 which are welded together and define a plurality of alternating tops and parallel gutters facing the interior of the container. These corrugated pile sheets provide the container floor with sufficient structural rigidity to prevent excess bending of the container floor due to the weight of the water pressing thereon. In particular, the floor 20 is less susceptible to bending or sagging due to the weight of the water in the container than a floor comprising only a flat plate of a same material and weight would be. The invention thus allows the floor 20 to be constructed which can withstand the water pressure without excessive sagging, using relatively little material.

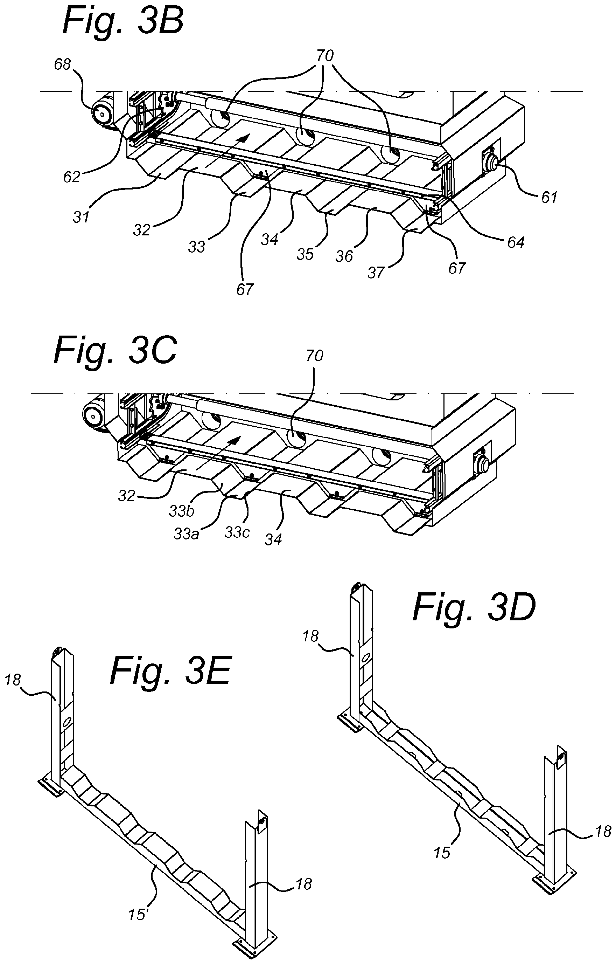

The gutters formed by the pile sheets in the floor run along the longitudinal direction of the container between sidewalls 11 and 13. Heavier particles in the water will collect on the floor and in particular will collect in the gutters of the floor and to a lesser extent on the tops of the floor. A scraping device 60 is provided for removing sludge, that has collected on the floor, from the container. The scraping device 60 shown in Fig. 2B comprises a drive axle 61 and sprockets 62 connected thereto (only one of which is shown in Fig. 2B). The device 60 further comprises two endless chains 63 which are looped around the sprockets 62, and six scraping elements 64, with each scraping element being attached to the two endless chains. The scraping device 60 is arranged for moving the scraping elements 64 in an endless loop in such a manner that they push sludge that has collected on the floor, in particular in the gutters, towards through-openings 70 in sidewall 13, to allow the sludge to pass out of the container 10. A motor (not shown in Fig. 1A, but shown for instance in Fig. 3B) is arranged on the outside of the container 10 and connected to the drive axle 61 to drive rotation of the axle 61 and of sprockets 62 which in turn drive movement of the scraping elements 64.

Figs. 3A and 3B shows a sectional view of part of the container 10, in which the alternating tops 32,34,36 and parallel gutters 31,33,35,37 of the floor 20 near sidewall 13 are shown in more detail. Fig. 3A further shows three scraping elements 64 of the scraping device, each scraping element comprising two scraping blades 67. Each blade 67 is shaped to fit in a corresponding gutter with a little play, so that it can push sludge that has collected in the gutter towards a corresponding through opening 70 into which the gutter debouches. The scraping elements 64 shown in Figs. 3A and 3B each have a number of scraping blades that is less than the number of gutters. Each scraping element 64 can thus be constructed using relatively little material, and the pressure on each scraping element during use is relatively low as it does not have push sludge along all of the gutters.

Regardless of the number of scraping blades of each scraping element, and as shown in more detail in Fig. 3B, the gutters each comprise two inclined sidewalls 33b,33c and a lower surface 33a connected to and between the sidewalls and facing the interior of the container. The scraping elements of the scraping device can be displaced longitudinally in the direction of the arrow towards the distal end of the gutters where the gutters debouch in the openings 70 in the sidewall 13. The blades of the scraping elements match the shape of the sidewalls and lower surface of each gutter. The longitudinal displacement of the scraping elements 64 is driven via drive axle 61 which drives the endless belts 63 to simultaneously move the scraping elements along the lateral gutters, in order to push sludge in the gutters towards the openings 7.

Fig. 3C shows a detail of another scraping element 64' as may be used with the present invention and which comprises a number of scraping blades that is equal to the number of gutters in the floor. If such scraping element is used, it may suffice if the scraping device is provided with only one or two such scraping elements 64' to scrape sludge along the gutters towards the openings 70.

Fig. 3D shows an isometric view of a support bar 15 which extends substantially horizontally along its longitudinal direction between the two vertical supports 18 shown in Figs. 1A and 1B. The vertical supports ensure that a downward facing side of the support bar 15 is spaced apart from the surface S on which the vertical supports 18 rest. An upwardly facing side of the support bar 15 abuts the lower downward facing side of the floor 20 and matches the shape thereof. Preferably, as shown in Fig. 3D, the support bar 15 has a substantially u-shaped cross-section when seen in cross-section in a plane normal to the longitudinal direction of the support bar 15. This allows the support bar to be manufactured by cutting a shape from plate steel such that the edges on either side of the shape fit with the lower side of the floor 20, and subsequently folding the shape to produce the support bar with the U-shaped cross-section.

Alternatively, instead of a U-shaped cross-section, a similar support bar 15' which is closed its upwardly facing side which faces the lower side of the floor may be used, as shown in Fig. 3E.

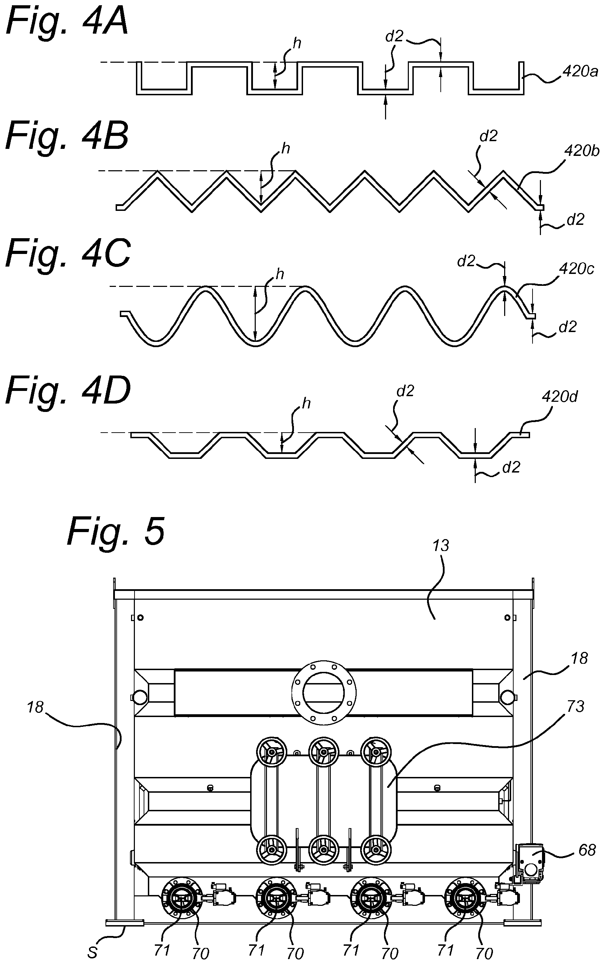

Figs 4A - 4C respectively show cross-sections of floors 420a, 420b, 420c, 420d as may be used in a gravity separation unit according to the present invention. Each of the gutters has a thickness d2 measured in a direction normal to the surface of the gutter. Floor 420 shown in Fig. 4A has a number of U-shaped gutters, with the sidewalls of the gutters normal to the tops of the floor and the lower surfaces of the gutters. Fig. 4B shows a floor having gutters with a triangular shaped cross section, and the floor of Fig. 4C has a sinusoidal cross-section. In the examples shown in Figs. 4A -4C, a distance h between the top and the lower surface of the gutter is about 15 cm, though it will be appreciated that according to the invention these distances may be anywhere between 3 and 30 cm. It will be clear to the skilled person than may types of corrugated plates exist which can be used to form the floor or part of the floor of the invention.

Fig. 5 shows an outer side view of the container at wall 13, wherein the openings 70 which extend through a lower portion of the wall 13 are arranged such that the distal ends of the plurality of gutters terminate in the openings. Drain valves 71 are arranged within the respective openings 70 and can be opened to extract the sludge that has been pushed by the scraping device to the distal end of the gutters, out of the container. The wall 13 is provided with an access hatch 73, which can be opened to access the interior of the container 13 through the wall, e.g. during maintenance when there is substantially no water present in the container. Further shown is a motor 68 on the outside of the container, which is connected to the drive axle 61 for driving movement of the scraping elements.

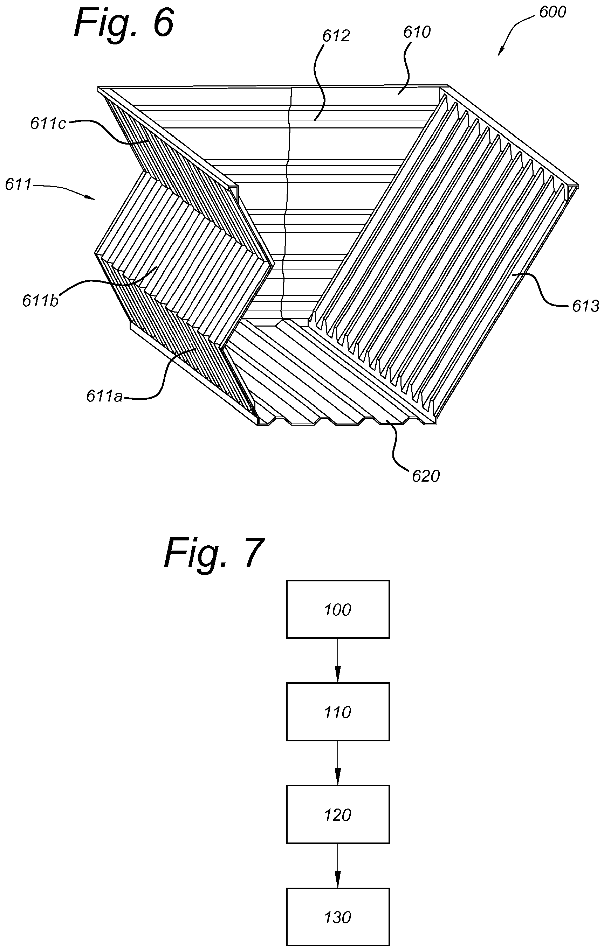

Fig. 6 schematically shows an isometric partial view of a gravity separation unit according to the invention in the form of sedimentation unit 600, with one of the sidewalls not shown to provide a better view of the interior. The sedimentation unit 600 is provided with a container 610 comprising a floor 620 with corrugated pile sheets which define a plurality of alternating tops and parallel gutters facing the interior of the container. As in the floor 20 of the DAF unit shown in Fig. 1A, the tops and lower portions of the gutters in the floor 620 are vertically spaced apart by a distance of between 3 and 30 cm from each other. The container further has sidewalls 611, 612, 613, wherein wall 611 comprises three portions, 611a, 661b, 611c of which portions 611a and 611c are parallel to each other, and the portion 611b interconnects these portions and extends non-parallel to portions 611a and 611b. Though only 3 of the sidewalls of the container are shown, the container has a further sidewall similar to sidewall 612, as will be obvious to the skilled person.

The sidewalls 611,612,613 are made from corrugated sheets which define gutters and tops. In sidewall 612 the gutters extend substantially horizontally, whereas in the sidewalls 611, 613 and the gutters extend substantially towards the floor at an angle greater than 45 degrees to the floor, 620. The sedimentation unit 600 does not have a plate pack, but otherwise may many or all of the features of the DAF described earlier herein, such as openings in a sidewall near the end of the gutters, and scraping device and/or jet nozzles for moving sludge that has collected in the gutters of the floor towards an end of the gutters.

Fig. 7 shows a flowchart of a method according to the invention, for manufacturing a gravity separator unit such as a dissolved air flotation unit or a sedimentation unit. The gravity separator unit may be gravity separator unit according to the invention described herein. In step 100 a container for the gravity separator unit is provided, wherein the container is adapted for containing a volume of water of at least 3m³ and has sidewalls and a floor, wherein the floor comprises one or more corrugated pile sheets which define a plurality of alternating tops and parallel gutters facing the interior of the container. The tops and lower portions of the floor are vertically spaced apart by a distance of between 3 and 30 cm from each other, preferably a distance of between 5 and 15 cm from each other. Though steps 110, 120 and 130 are highly preferred, they are optional. In step 110 a plate pack is installed in the container, for promoting laminar flow of water to enhance particle separation. In step 120 a scraping device is provided, wherein the scraping device is located at least partially within the container at or near the floor, the scraping device comprising one or more scraping elements, each scraping element comprising one or more scraping blades, wherein the scraping device is adapted for moving each scraping blade along and at least partially in a corresponding gutter towards a corresponding opening in the sidewall. In step 130 a horizontal and/or vertical position of the scraping blades on each scraping element is adjusted so that each scraping blade of the scraping element fits within a gutter, preferably such that the edges of the scraping blade remains spaced apart by at least 0,1 cm, e.g. at least 1 cm, from the walls of the gutter during movement of the blade through the gutter.

Though not shown Fig 7, the method may comprise a further step of providing a plate pack in the container.

## Claims

1. A gravity separator unit (1; 600) comprising a container (10) for holding at least 1m³ of water to be treated, the container having sidewalls (11,12,13,14) and a floor (20; 620), wherein the floor comprises one or more corrugated pile sheets (21,22,23) which define a plurality of alternating tops (32,34,36) and parallel gutters (31,33,35,37) facing the interior of the container, wherein the tops and lower portions of the gutters are vertically spaced apart by a distance (h) of between 3 and 30 cm from each other,
wherein the gravity separator unit further comprises a scraping device (60) that is at least partially arranged within the container at or near the floor, wherein the scraping device comprises at least two scraping elements (64), each scraping element comprising one or more scraping blades (67), wherein the scraping device is adapted for moving each of the scraping elements along the gutters towards an end of the gutters with each of the one or more scraping blades thereof extending at least partially in a corresponding gutter.

2. Gravity separator unit according to claim 1, wherein each pile sheet has a thickness between 1 and 5 mm, preferably between 1,8 and 3,2 mm.

3. Gravity separator unit according to claim 1 or 2, wherein the floor has a length, and wherein the plurality of gutters extends substantially uninterrupted along a direction parallel to a longitudinal direction of the floor for at least half said length, preferably at for at least three fourth of said length.

4. Gravity separator unit according to any one of the preceding claims, further comprising jet nozzles (78) arranged for ejecting jets of water into the gutters in a direction parallel to the longitudinal direction of the gutters.

5. Gravity separator unit according to any one of the preceding claims, wherein each gutter of the plurality of gutters debouches at its distal end in a corresponding opening (70) in one of the sidewalls (13), wherein each of said corresponding openings is arranged for allowing passage of sludge from the distal end of its corresponding gutter through the sidewall to outside of the container.

6. Gravity separator unit according to any one of the preceding claims, wherein the tops and lower portions of the gutters are vertically spaced apart by a distance of between 5 and 15 cm from each other.

7. Gravity separator unit according to any one of the preceding claims, wherein each of the scraping blades (67) is shaped to fill between 90% and 99% of the cross section of its corresponding gutter when seen in projection onto a plane normal to the longitudinal direction of the gutters.

8. Gravity separator unit according to any one of the preceding claims, wherein each of the scraping blades is arranged for fitting within a corresponding gutter during movement of the blade along the longitudinal direction of the gutter, preferably such that de edges of the scraping blade remains spaced apart by at least 0,1 cm, and preferably less than 1 cm from the gutter as the blade is moved through the gutter in the longitudinal direction of the gutter.

9. Gravity separator unit according to any one of the preceding claims, wherein the floor (20) comprises a predetermined number of gutters, and each of said scraping elements comprises the same predetermined number of scraping blades.

10. Gravity separator unit according to any one of the preceding claims, wherein the scraping device comprises and endless chain (63) or belt which extends along a longitudinal direction of the container (10) and to which the scraping elements (64) are attached.

11. Gravity separator unit according to any one of the preceding claims, wherein the floor (20) comprises a predetermined number of gutters, and wherein one or more of said scraping elements comprises at least two scraping blades, wherein at least one of said scraping elements is provided with fewer scraping blades that said predetermined number.

12. Gravity separator unit (600) according to any one of the preceding claims, wherein one or more of the sidewalls (611,612,614) comprises, or is formed from, one or more corrugated pile sheets which define a plurality of alternating tops and parallel gutters facing the interior of the container.

13. Gravity separator unit according to any one of the preceding claims, wherein the gravity separator unit is a dissolved air floatation unit (1) or a sedimentation unit (600).

14. Method of manufacturing a gravity separator unit, comprising the steps of:
providing (100) a container (1) for treatment of water in the gravity separator unit, the container having sidewalls (11, 12, 13, 14) and a floor (20) and adapted for containing a volume of water of at least 1m³;
wherein the floor comprises one or more corrugated pile sheets which define a plurality of alternating tops and parallel gutters facing the interior of the container, wherein the tops and lower portions are vertically spaced apart by a distance (h) of between 3 and 30 cm from each other,
the method further comprising:
- providing (120) a scraping device (60) at least partially within the container at or near the floor, the scraping device comprising at least two scraping elements (64), each scraping element comprising one or more scraping blades (67), wherein the scraping device is adapted for moving each scraping blade along and at least partially in a corresponding gutter along the longitudinal direction of the gutter towards one of said sidewalls (13).

15. Method of manufacturing a gravity separator unit according to claim 14, the method further comprising the step of:
adjusting (130) a horizontal and/or a vertical spacing of the scraping blades on each scraping element so that each scraping blade of the scraping element fits within a gutter, preferably in such a manner that the edges of the scraping blade remain spaced apart by at least 0,1 cm from the walls of the gutter during translational movement of the blade through the gutter in the longitudinal direction of the gutter, and preferably less than 1 cm.

## Patentansprüche

1. Schwerkraftabscheidereinheit (1; 600) mit einem Behälter (10) zur Aufnahme von mindestens 1 m³ zu behandelndem Wasser, wobei der Behälter Seitenwände (11, 12, 13, 14) und einen Boden (20; 620) aufweist, wobei der Boden eine oder mehrere gewellte Stapelbleche (21, 22, 23) umfasst, die eine Vielzahl von abwechselnden Spitzen (32, 34, 36) und parallelen Rinnen (31, 33, 35, 37) definieren, die dem Inneren des Behälters zugewandt sind, wobei die Spitzen und untere Abschnitte der Rinnen vertikal um einen Abstand (h) zwischen 3 und 30 cm voneinander beabstandet sind,
wobei die Schwerkraftabscheidereinheit ferner eine Schabvorrichtung (60) umfasst, die zumindest teilweise innerhalb des Behälters am oder in der Nähe des Bodens angeordnet ist, wobei die Schabvorrichtung mindestens zwei Schabelemente (64) umfasst, wobei jedes Schabeelement eine oder mehrere Schabklingen (67) umfasst, wobei die Schabvorrichtung dafür ausgelegt ist, jedes der Schabeelemente entlang der Rinnen zu einem Ende der Rinnen zu bewegen, wobei sich jede der einen oder mehreren Schabklingen davon zumindest teilweise in eine entsprechende Rinne erstreckt.

2. Schwerkraftabscheidereinheit nach Anspruch 1, wobei jedes Stapelblech eine Dicke zwischen 1 und 5 mm, vorzugsweise zwischen 1,8 und 3,2 mm, aufweist.

3. Schwerkraftabscheidereinheit nach Anspruch 1 oder 2, wobei der Boden eine Länge hat und wobei sich die Vielzahl von Rinnen im Wesentlichen ununterbrochen entlang einer Richtung parallel zu einer Längsrichtung des Bodens über mindestens die Hälfte dieser Länge, vorzugsweise über mindestens drei Viertel dieser Länge, erstreckt.

4. Schwerkraftabscheidereinheit nach einem der vorhergehenden Ansprüche, die ferner Strahldüsen (78) aufweist, die so angeordnet sind, dass sie Wasserstrahlen in die Rinnen in einer Richtung parallel zur Längsrichtung der Rinnen ausstoßen.

5. Schwerkraftabscheidereinheit nach einem der vorhergehenden Ansprüche, wobei jede Rinne der Vielzahl von Rinnen an ihrem distalen Ende in eine entsprechende Öffnung (70) in einer der Seitenwände (13) einmündet, wobei jede der entsprechenden Öffnungen so angeordnet ist, dass sie den Durchlass von Schlamm vom distalen Ende der entsprechenden Rinne durch die Seitenwand zur Außenseite des Behälters ermöglicht.

6. Schwerkraftabscheidereinheit nach einem der vorhergehenden Ansprüche, wobei die oberen und unteren Abschnitte der Rinnen vertikal in einem Abstand von 5 bis 15 cm voneinander angeordnet sind.

7. Schwerkraftabscheidereinheit nach einem der vorhergehenden Ansprüche, wobei jede der Schabklingen (67) so geformt ist, dass sie in einer Projektion auf eine Ebene senkrecht zur Längsrichtung der Rinnen zwischen 90 % und 99 % des Querschnitts der entsprechenden Rinne ausfüllt.

8. Schwerkraftabscheidereinheit nach einem der vorhergehenden Ansprüche, wobei jede der Schabklingen so angeordnet ist, dass sie während der Bewegung der Klinge entlang der Längsrichtung der Rinne in eine entsprechende Rinne passt, vorzugsweise so, dass die Kanten der Schabklinge um mindestens 0,1 cm und vorzugsweise weniger als 1 cm von der Rinne beabstandet bleiben, wenn die Klinge in der Längsrichtung der Rinne durch die Rinne bewegt wird.

9. Schwerkraftabscheidereinheit nach einem der vorhergehenden Ansprüche, wobei der Boden (20) eine vorbestimmte Anzahl von Rinnen aufweist und jedes der Schabeelemente die gleiche vorbestimmte Anzahl von Schabklingen aufweist.

10. Schwerkraftabscheidereinheit nach einem der vorhergehenden Ansprüche, wobei die Schabvorrichtung eine endlose Kette (63) oder ein endloses Band aufweist, die bzw. das sich entlang einer Längsrichtung des Behälters (10) erstreckt und an der bzw. dem die Schabelemente (64) befestigt sind.

11. Schwerkraftabscheidereinheit nach einem der vorhergehenden Ansprüche, wobei der Boden (20) eine vorbestimmte Anzahl von Rinnen aufweist und wobei eines oder mehrere der Schabelemente mindestens zwei Schabklingen aufweist, wobei mindestens eines der Schabeelemente mit weniger Schabklingen versehen ist als die vorbestimmte Anzahl.

12. Schwerkraftabscheidereinheit (600) nach einem der vorhergehenden Ansprüche, wobei eine oder mehrere der Seitenwände (611, 612, 614) eine oder mehrere gewellte Stapelbleche aufweist oder daraus ausgebildet ist, die eine Vielzahl von abwechselnden Spitzen und parallelen Rinnen definieren, die dem Inneren des Behälters zugewandt sind.

13. Schwerkraftabscheidereinheit nach einem der vorangehenden Ansprüche, wobei die Schwerkraftabscheidereinheit eine Flotationseinheit (1) zur Behandlung von gelöster Luft oder eine Sedimentationseinheit (600) ist.

14. Verfahren zur Herstellung einer Schwerkraftabscheidereinheit, das die folgenden Schritte umfasst:
Bereitstellen (100) eines Behälters (1) zur Behandlung von Wasser in der Schwerkraftabscheidereinheit, wobei der Behälter Seitenwände (11, 12, 13, 14) und einen Boden (20) aufweist und geeignet ist, ein Wasservolumen von mindestens 1 m³ zu enthalten;
wobei der Boden eine oder mehrere gewellte Stapelbleche umfasst, die eine Vielzahl von abwechselnden Spitzen und parallelen Rinnen definieren, die dem Inneren des Behälters zugewandt sind, wobei die Spitzen und untere Abschnitte vertikal durch einen Abstand (h) von zwischen 3 und 30 cm voneinander beabstandet sind,
wobei das Verfahren ferner aufweist:
- Bereitstellen (120) einer Schabvorrichtung (60) zumindest teilweise innerhalb des Behälters am oder in der Nähe des Bodens, wobei die Schabvorrichtung mindestens zwei Schabelemente (64) umfasst, wobei jedes Schabelement eine oder mehrere Schabklingen (67) umfasst, wobei die Schabvorrichtung dazu geeignet ist, jede Schabklinge entlang und zumindest teilweise in einer entsprechenden Rinne entlang der Längsrichtung der Rinne in Richtung einer der Seitenwände (13) zu bewegen.

15. Verfahren zur Herstellung einer Schwerkraftabscheidereinheit nach Anspruch 14, wobei das Verfahren ferner den folgenden Schritt umfasst:
Einstellen (130) eines horizontalen und/oder eines vertikalen Abstands der Schabklingen an jedem Schabelement, so dass jede Schabeklinge des Schabeelements in eine Rinne passt, vorzugsweise so, dass die Kanten der Schabeklinge während der Translationsbewegung der Klinge durch die Rinne in Längsrichtung der Rinne um mindestens 0,1 cm, vorzugsweise weniger als 1 cm, von den Wänden der Rinne beabstandet bleiben.

## Revendications

1. Unité de séparateur par gravité (1 ; 600) comprenant un contenant (10) pour contenir au moins 1 m³ d'eau à traiter, le conteneur présentant des parois latérales (11, 12, 13, 14) et un plancher (20 ; 620), dans laquelle le plancher comprend une ou plusieurs palplanches ondulées (21, 22, 23) qui définissent une pluralité de sommets alternés (32, 34, 36) et de gouttières parallèles (31, 33, 35, 37) faisant face à l'intérieur du contenant, dans laquelle les sommets et les parties inférieures des gouttières sont espacés mutuellement verticalement d'une distance (h) comprise entre 3 et 30 cm,
dans laquelle l'unité de séparateur par gravité comprend en outre un dispositif de raclage (60) qui est au moins partiellement agencé à l'intérieur du contenant au niveau ou près du plancher, dans laquelle le dispositif de raclage comprend au moins deux éléments de raclage (64), chaque élément de raclage comprenant une ou plusieurs lames de raclage (67), dans laquelle le dispositif de raclage est adapté pour déplacer chacun des éléments de raclage le long des gouttières vers une extrémité des gouttières, chacune des une ou plusieurs lames de raclage de ceux-ci s'étendant au moins partiellement dans une gouttière correspondante.

2. Unité de séparateur par gravité selon la revendication 1, dans laquelle chaque palplanche présente une épaisseur comprise entre 1 et 5 mm, de préférence comprise entre 1,8 et 3,2 mm.

3. Unité de séparateur par gravité selon la revendication 1 ou 2, dans laquelle le plancher présente une longueur, et dans laquelle la pluralité de gouttières s'étend sensiblement sans interruption le long d'une direction parallèle à une direction longitudinale du plancher sur au moins la moitié de ladite longueur, de préférence sur au moins trois quarts de ladite longueur.

4. Unité de séparateur par gravité selon l'une quelconque des revendications précédentes, comprenant en outre des buses de jet (78) agencées pour éjecter des jets d'eau jusque dans les gouttières dans une direction parallèle à la direction longitudinale des gouttières.

5. Unité de séparateur par gravité selon l'une quelconque des revendications précédentes, dans laquelle chaque gouttière de la pluralité de gouttières débouche à son extrémité distale dans une ouverture correspondante (70) dans l'une des parois latérales (13), dans laquelle chacune desdites ouvertures correspondantes est agencée pour permettre le passage de boue à partir de l'extrémité distale de sa gouttière correspondante à travers la paroi latérale vers l'extérieur du contenant.

6. Unité de séparateur par gravité selon l'une quelconque des revendications précédentes, dans laquelle les sommets et parties inférieures des gouttières sont espacées verticalement les uns des autres d'une distance comprise entre 5 et 15 cm.

7. Unité de séparateur par gravité selon l'une quelconque des revendications précédentes, dans laquelle chacune des lames de raclage (67) est mise en forme pour remplir entre 90 % et 99 % de la section transversale de sa gouttière correspondante lorsqu'elle est vue en projection sur un plan perpendiculaire à la direction longitudinale des gouttières.

8. Unité de séparateur par gravité selon l'une quelconque des revendications précédentes, dans laquelle chacune des lames de raclage est agencée pour s'ajuster à l'intérieur d'une gouttière correspondante pendant un déplacement de la lame le long de la direction longitudinale de la gouttière, de préférence de telle sorte que les bords de la lame de raclage restent espacés d'au moins 0,1 cm, et de préférence de moins de 1 cm à partir de la gouttière lorsque la lame est déplacée à travers la gouttière dans la direction longitudinale de la gouttière.

9. Unité de séparateur par gravité selon l'une quelconque des revendications précédentes, dans laquelle le plancher (20) comprend un nombre de gouttières prédéterminé, et chacun desdits éléments de raclage comprend le même nombre de lames de raclage prédéterminé.

10. Unité de séparateur par gravité selon l'une quelconque des revendications précédentes, dans laquelle le dispositif de raclage comprend une chaîne ou une courroie sans fin (63) qui s'étend le long d'une direction longitudinale du contenant (10) et à laquelle les éléments de raclage (64) sont fixés.

11. Unité de séparateur par gravité selon l'une quelconque des revendications précédentes, dans laquelle le plancher (20) comprend un nombre de gouttières prédéterminé, et dans laquelle un ou plusieurs desdits éléments de raclage comprennent au moins deux lames de raclage, dans laquelle au moins l'un desdits éléments de raclage est pourvu de moins de lames de raclage que ledit nombre prédéterminé.

12. Unité de séparateur par gravité (600) selon l'une quelconque des revendications précédentes, dans laquelle une ou plusieurs des parois latérales (611, 612, 614) comprennent, ou sont formées à partir de, une ou plusieurs palplanches ondulées qui définissent une pluralité de sommets alternés et de gouttières parallèles faisant face à l'intérieur du contenant.

13. Unité de séparateur par gravité selon l'une quelconque des revendications précédentes, dans laquelle l'unité de séparateur par gravité est une unité de flottaison d'air dissous (1) ou une unité de sédimentation (600).

14. Procédé de fabrication d'un unité de séparateur par gravité, comprenant les étapes consistant à :
fournir (100) un contenant (1) pour un traitement d'eau dans l'unité de séparateur par gravité, le contenant présentant des parois latérales (11, 12, 13, 14) et un plancher (20) et étant adapté pour contenir un volume d'eau d'au moins 1 m³ ;
dans lequel le plancher comprend une ou plusieurs palplanches ondulées qui définissent une pluralité de sommets alternés et de gouttières parallèles faisant face à l'intérieur du contenant, dans lequel les sommets et les parties inférieures sont espacés les uns des autres verticalement d'une distance (h) comprise entre 3 et 30 cm,
le procédé comprenant en outre l'étape consistant à :
- fournir (120) un dispositif de raclage (60) au moins partiellement à l'intérieur du contenant au niveau ou à proximité du plancher, le dispositif de raclage comprenant au moins deux éléments de raclage (64), chaque élément de raclage comprenant une ou plusieurs lames de raclage (67), dans lequel le dispositif de raclage est adapté pour déplacer chaque lame de raclage le long de et au moins partiellement dans une gouttière correspondante le long de la direction longitudinale de la gouttière vers l'une desdites parois latérales (13).

15. Procédé de fabrication d'une unité de séparateur par gravité selon la revendication 14, le procédé comprenant en outre l'étape consistant à :
ajuster (130) un espacement horizontal et/ou vertical des lames de raclage sur chaque élément de raclage de sorte que chaque lame de raclage de l'élément de raclage s'ajuste à l'intérieur d'une gouttière, de préférence de telle sorte que les bords de la lame de raclage restent espacés d'au moins 0,1 cm des parois de la gouttière pendant un mouvement de translation de la lame à travers la gouttière dans la direction longitudinale de la gouttière, et de préférence de moins de 1 cm.
